# EUROPEAN PATENT SPECIFICATION

(11) **EP 0 496 309 B1**
(45) Date of publication and mention of the grant of the patent: **21.06.1995**
(21) Application number: 92100803.3
(22) Date of filing: 20.01.1992
(51) Int. Cl.: B60P 1/48, B60P 1/64

(54) **Vehicle having a U-shaped and rearwardly open frame**
Fahrzeug mit einem U-förmigen, hinten offenen Rahmen
Véhicule ayant un cadre en forme de U et ouvert à l'arrière

(30) Priority: 25.01.1991 SE 9100224
(43) Date of publication of application: 29.07.1992
(73) Proprietor: Alm, Lars-Göran, S-212 31 Malmö (SE)
(72) Inventor: Alm, Lars-Göran, S-212 31 Malmö (SE)
(74) Representative: Wagner, Karl Heinz

(56) References cited:
- DE-U- 7 133 433
- FR-A- 2 106 120
- GB-A- 1 601 484
- US-A- 3 966 068

## Description

The present invention relates to a vehicle having a drive unit and a U-shaped and rearwardly open frame comprising a web member which is fixedly connected with the driving unit, said vehicle being adapted to move backwards relative to a load carrier until said load carrier is situated within the shanks of said U-shaped frame and adapted to lift said load carrier from the ground for transportation thereof after lifting and whereby the U-shaped frame includes a lifting unit having such vertically movable lifting arms that said arms can
a) engage the load carrier when it stands on the ground within the shanks of the U-shaped frame;
b) lift said load carrier from the ground to a transport position, in which said load carrier is lockable relative to said U-shaped frame and in which the vehicle can transport said load carrier; and
c) lift said load carrier up above said transport position to one or several positions, in which said load carrier is situated at a suitable height for loading and/or unloading.

Vehicles of the abovementioned type are already known from e.g. DE-U-7 133 433. This prior art vehicle includes a lifting and tilting device for lifting and tilting the load carrier. This lifting and tilting device comprises two cylinder/plunger devices and two support rails provided thereon. During lifting and lowering, the cylinder/plunger devices are pivoted and displace the support rails and thus, the load carrier in a forward or backward direction relative to the U-shaped frame.

At vehicles wherein the load carrier shall be loaded with heavy loads, such a prior art lifting device is not appropriate. Thus, two cylinder/plunger devices do not suffice for lifting heavy loads and since they have been located also for tilting the load carrier, they have an unfavourable location for providing an advantageous lifting moment.

Furthermore, said cylinder/plunger devices are pivotally mounted such that they during the lifting and lowering movements displace the load carrier a substantial distance in a direction along the vehicle. This is also inappropriate if the load carrier is heavily loaded, while then, the load is displaced relative to the vehicle and tilting of the vehicle might occur under unfavourable circumstances.

A vehicle having another type of lifting device is known from FR-A-2 106 120. This prior art vehicle is a trailer with a lifting device in the form of two pairs of crossed lifting arms which are pivoted relative to each other in a scissors-like manner by means of cylinder/plunger devices for lifting and lowering a load carrier. This prior art lifting device is neither suitable for handling heavy loads, since it is much too weak, generates too small a lifting force and also at least to some extent displaces the load carrier in a backward or forward direction during lifting and lowering, which at worst might cause tilting of the trailer.

The object of the present invention is to provide a lifting unit at vehicles of the abovementioned type, which permits safe handling also of very heavy load carriers. This is arrived at according to the invention by means of the characterizing features of claim 1.

By providing four lifting arms in accordance with said characterizing features and operate each lifting arm by means of a cylinder/plunger device mounted in accordance with said characterizing features, a very solid and reliable lifting unit is obtained, which eliminates the risk for tilting of the vehicle and which also permits handling of very heavily loaded load carriers.

The invention will be further described below with reference to the accompanying drawings. in which
- fig. 1: is a perspective view of a vehicle according to the invention;

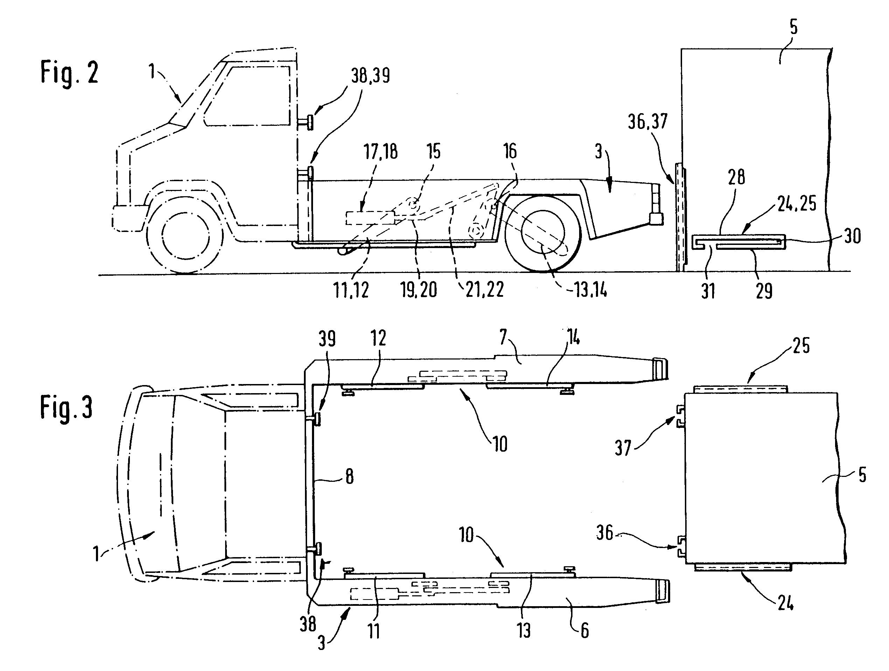

- fig. 2: is a side view of the vehicle of fig. 1 standing in front of a load carrier to be fetched;
- fig. 3: is a plan view of the vehicle and load carrier of fig .2;
- fig. 4: is a side view of the vehicle according to the invention and positioned such that the load carrier is situated within the frame of the vehicle;
- fig. 5: is a side view of the vehicle of fig. 4 holding the load carrier in a transport position;
- fig. 6: is a side view of the vehicle of figs. 4 and 5 with the load carrier lifted to an upper position;
- fig. 7: is a section through members of the vehicle along the line VII-VII in fig. 5;
- fig. 8: is a section through members of the vehicle along the line VIII-VIII in fig. 6;
- fig. 9: is a perspective view of a second embodiment of the vehicle according to the invention;
- fig. 10: is a side view of the vehicle of fig. 9 positioned such that the load carrier is located within the frame of said vehicle;
- fig. 11: is a view of the vehicle of fig. 10 holding the load carrier in a transport position; and
- fig. 12: is a view of the vehicle of fig. 11 with the load carrier lifted to an upper position.

The vehicle illustrated in the drawings comprises a drive unit 1 with the driving compartment of the vehicle as well as the front wheels 2 and a rear part including a U-shaped and rearwardly open frame 3 as well as rear wheels 4 provided thereon.

The vehicle is adapted to move backwards relative to a load carrier 5, e.g. a container, until said load carrier is situated within the shanks 6 and 7 of said U-shaped frame 3 and preferably adjacent the web member 8 of said frame. The vehicle is also adapted to lift the load carrier 5 from the ground 9 and to transport said load carrier after lifting thereof.

The U-shaped frame 3 is through its web member 8 immovably mounted in vertical direction on the part of the vehicle situated in front of said frame, i.e. at the driving compartment 1 or to another member connected with said driving compartment.

On this in vertical direction relative to the driving compartment 1 immovable frame 3 there is provided a lifting unit 10 having such vertically movable lifting arms 11-14 that said arms can
a) engage the load carrier 5 when it stands on the ground 9 within the shanks 6, 7 of the U-shaped frame 3;
b) lift said load carrier 5 from the ground 9 to a transport position T, in which said load carrier is lockable relative to said U-shaped frame 3 and in which the vehicle can transport said load carrier; and
c) lift said load carrier 5 up above said transport position T to one or several positions L in which said load carrier is situated at a suitable height for loading and/or unloading.

The lifting unit 10 may comprise two fore or front lifting arms 11, 12 and two rear lifting arms 13, 14. The fore lifting arm 11 is mounted on the shank 6 and the other fore lifting arm 12 on the shank 7. Both said fore lifting arms 11, 12 are preferably pivotable about horizontal axes 15 in an upward / backward direction from lower grip po-sitions A to transport positions B and further upwards / backwards to upper positions C. One rear lifting arm 13 of the lifting unit 10 is mounted on the shank 6 and the rear lifting arm 14 on the shank 7. Both of these rear lifting arms 13, 14 are preferably pivotable about horizontal axes 16 in an upward / forward direction from lower grip positions A to transport positions B and further upwards / forward to upper positions C.

For eliminating the risk of balancing problems during lifting and/or transportation, the vertically movable lifting arms 11-14 are pivotally mounted in such a manner that they can move the load carrier 5 in a vertical direction or a substantially vertical direction without substantial displacement in longitudinal direction and/or without substantial tilting relative to the U-shaped frame 3.

The lifting unit 10 further comprises two cylinder / plunger devices 17, 18 for operating the lifting arms 11-14. One cylinder / plunger device 17 is preferably built into the shank 6 and the plunger means 19 thereof preferably, through a power transmission arm 21, articulately connected with both said lifting arms 11, 13 such that the cylinder / plunger device 17 can swing or pivot these lifting arms simultaneously so that their swinging or pivoting movements depend on each other. The other cylinder / plunger device 18 is preferably built into the shank 7 and the plunger means 20 thereof is preferably, through a power transmission arm 22, articulately connected with both said lifting arms 12. 14 in such a manner that said cylinder / plunger device 18 can swing or pivot these lifting arms 12, 14 simulataneously and with swinging or pivoting movements that depend on each other.

Each lifting arm has at its outer end a preferably inwardly directed lifting pin 23, which is adapted to be brought into engagement with connecting means 24-27 on the load carrier 5. Each lifting pin 23 can include a rotatably mounted roller 23a.

Two fore connecting means 24, 25 are provided at the front on opposite sides of the load carrier 5 in such a way that the fore lifting arms 11, 12 can be brought to cooperate therewith. Two rear connecting means 26, 27 are provided on opposite sides of the load carrier 5 behind the fore connecting means 24, 25 and in such a way that the rear lifting arms 13, 14 can be brought to cooperate therewith.

Each connecting means 24, 27 has an upper, horizontally or substantially horizontally extending flange 28 and a lower, horizontally or substantially horizontally extending flange 29 and these flanges define together a horizontally or substantially horizontally extending groove 30 for the lifting pin 23 and its roller 23a. The lower flange has an aperture 31 through which the lifting pin 23 can be moved up and into the groove 30 until the roller 23a of said pin 23 engages the bottom or lower side of the upper flange 28.

At the fore connecting means 24, 25, the aperture 31 is preferably located at the front in the lower flange 29 and at the rear connecting means 26, 27 the aperture 31 is preferably located at the back in said lower flange 29.

For lifting the load carrier 5, the lifting arms 11-14 are swung upwards, whereby the lifting pins 23 thereof slide into the grooves 30 of the connecting means 24-27 through the apertures 31 and said grooves 30 are preferably only some what wider than the diameter of the rollers 23a of said lifting pins 23. When the rollers 23a of the lifting pins 23 reach the upper flanges 28, the lifting unit 10 starts to lift the load carrier 5 from the ground 9 and by further swinging or pivoting of the lifting arms 11-14 in upward direction, i.e. lifting of the load carrier 5, the lifting pins 23 and the rollers 23a on the fore lifting arms 11, 12 will move backwards in the grooves 30 of the fore connecting means 24, 25 and the lifting pins 23 and rollers 23a on the rear lifting arms 13, 14 will move forward in the grooves 30 of the rear connecting means 26, 27. Hereby, it is ensured that the load carrier 5 can not move in vertical direction relative to the lifting pins 23 in an unsuitable manner when said load carrier is lifted, lowered, held in lifted position or transported.

When the lifting arms 11-14 are swung in opposite direction, the load carrier 5 is lowered and can be placed on the ground 9, whereby the lifting unit 10 is released by swinging the lifting arms 11-14 to position A, and during this downward swinging or pivoting movement, the lifting pins 23 will disengage the connecting means 24-27.

In order to ensure that the connecting means 24-27 of the load carrier 5 are not clogged up with dirt when said load carrier is standing on the ground 9, said connecting means are located on a level substantially above the bottom or lower side 32 of said load carrier 5.

When the lifting unit 10 has lifted the load carrier 5 to the transport position T, then said load carrier can be locked in this transport position T relative to the frame 3 by locking said lifting unit 10 against movement and/or by bringing a lock device (not shown) on the frame 3 in locking engagement with the load carrier 5 or members provided thereon. The transport position T of the load carrier 5 is preferably chosen so that said load carrier thereby is positioned with its bottom or lower side 32 in level with the bottom or lower side 33 of the frame 3 or at any level between the lower side 33 and top or upper side 34 of said frame 3.

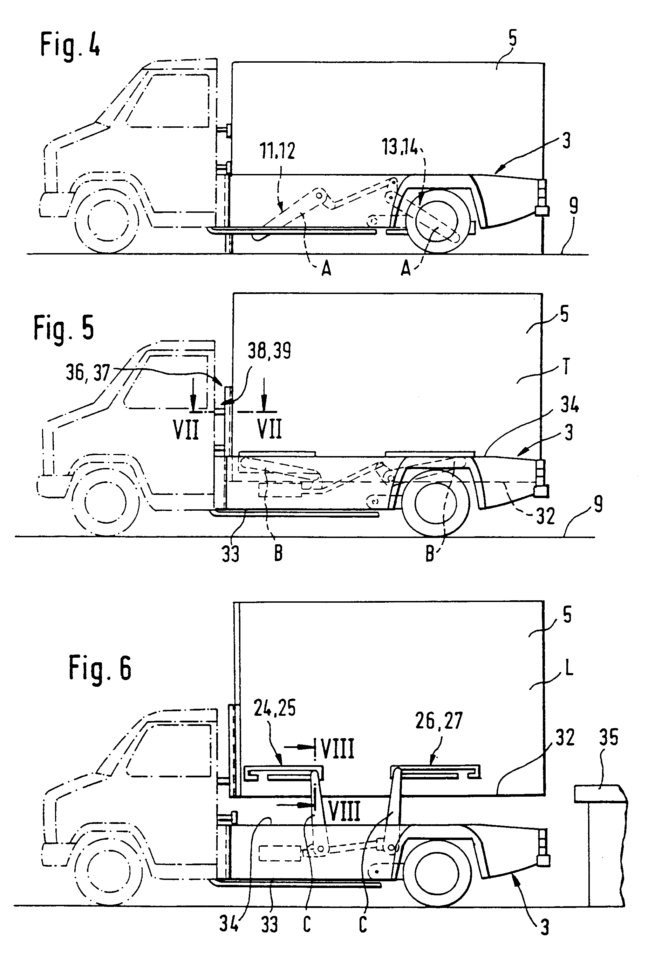

Furthermore, the lifting unit 10 can lift the load carrier 5 to such upper positions C that said load carrier is placed substantially above the upper side 34 of the U-shaped frame 3. Hereby, it is possible to e.g. lift the load carrier 5 to the level of a loading platform 35 (see fig. 6), from where a load can be unloaded or loaded into said load carrier 5.

In order to ensure that the lifting unit 10 lifts and lowers the load carrier 5 rectilinearly in vertical direction, said load carrier 5 is provided with grip portions 36, 37 which can cooperate with guide portions 38, 39 on the vehicle. The grip portions 36, 37 are preferably provided on a side of the load carrier 5 which is facing forward when said load carrier is situated in the frame 3 and the guide portions 38, 39 are preferably provided on the vehicle behind the driving compartment 1 and most preferably on the rear side thereof.

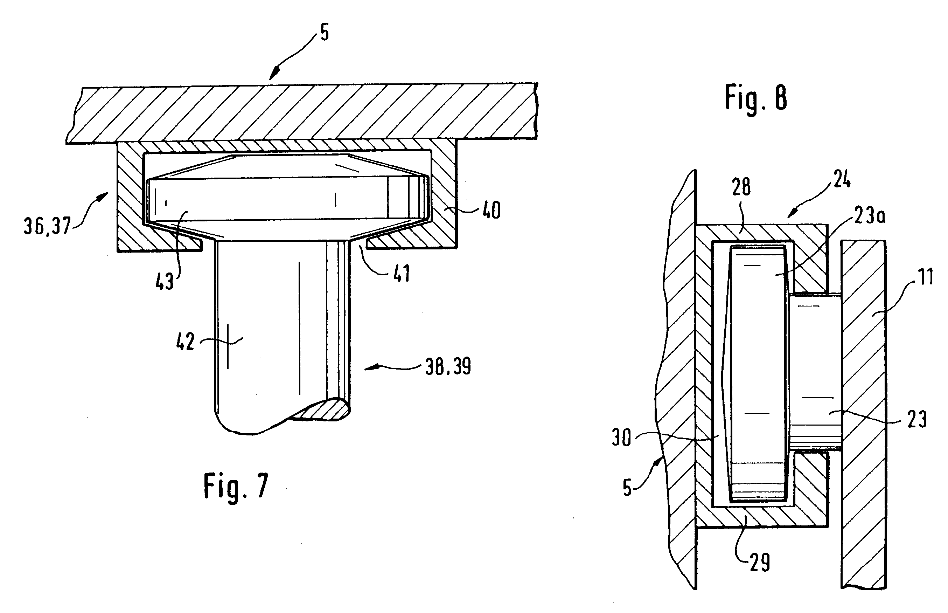

Each grip portion 36, 37 may comprise an elongated guide rail 40 (see fig. 7) in the shape of a square tube with a longitudinal slit 41.

Each guide portion 38, 39 may include a pin 42 which is provided on the driving compartment 1 and which on its free end has an expanding guide member 43. The pin 42 is dimensioned such that it can protrude into the guide rail through the slit 41 therein and the guide member 43 is dimensioned such that it fits into the interior of said guide rail 40.

These grip portions 36, 37 and guide portions 38, 39 are also mounted such that the guide rail 40 slides onto the guide member 43 when the lifting unit 10 lifts the load carrier 5 from the ground 9 and said guide rail 40 maintains its grip or engagement with said guide member 43 during the lifting and lowering movements and as long as said load carrier 5 is lifted from the ground 9.

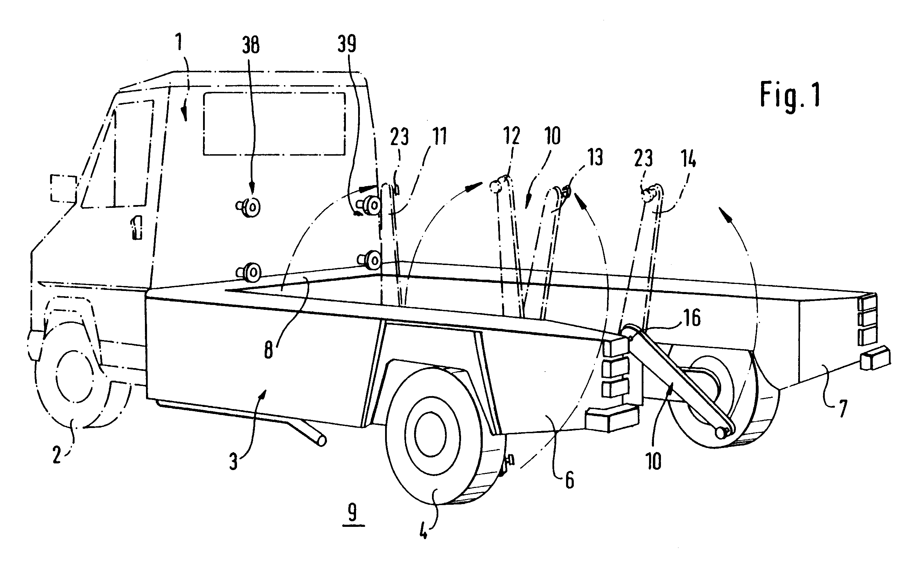

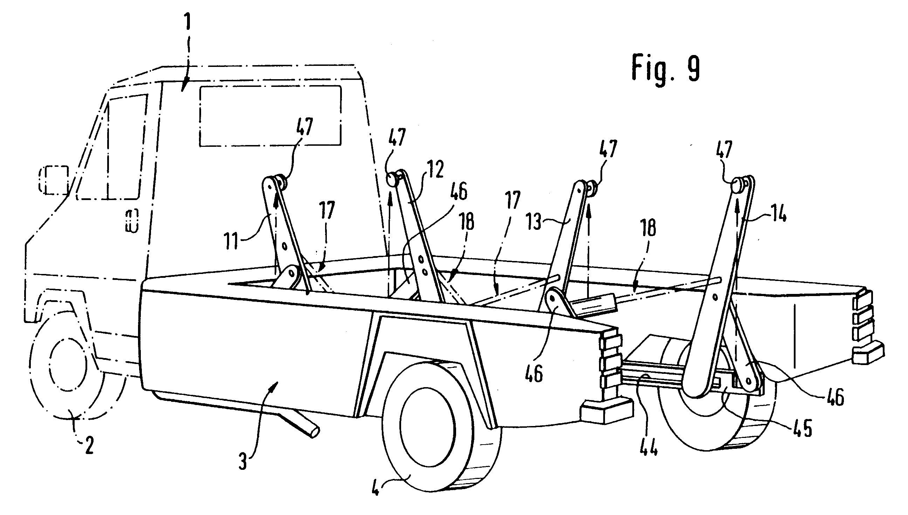

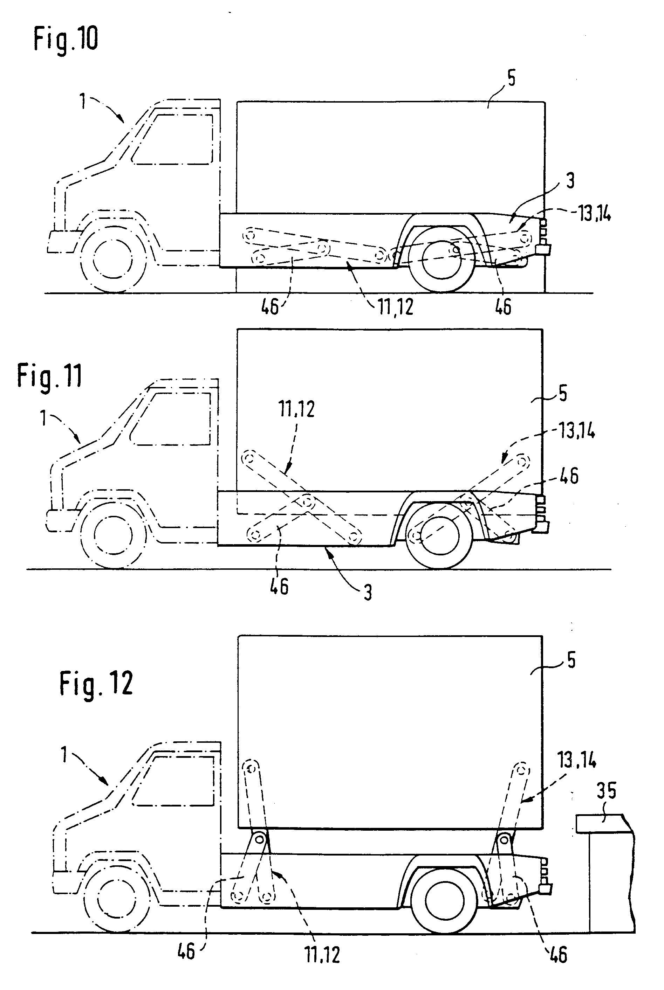

In the embodiments of the vehicle illustrated in figs 9-12, the vertically movable lifting arms 11-14 are designed in somewhat another manner than at the vehicle of fig. 1. Thus, each lifting arm 11-14 is at the bottom longitudinally displaceably mounted in the respective shank 6, 7, while it at the top is connectable to the load carrier 5 without being displaceable in relation thereto. For making this possible, each lifting arm 11-14 has at the bottom a pivot (not shown) which is inserted into and engages a guide groove 44 provided in a guide rail 45 on the respective shank 6, 7 and which extends in longitudinal direction of said respective shank. Each lifting arm 11-14 is also con-nected with the respective shank 6, 7 through a guide arm 46 which is pivotally mounted on the shank and pivotally provided on the respective lifting arm at a distance above its pivot, through which it is mounted in the guide groove 44.

When the respective lifting arm 11-14 is displaced in the guide groove 44 by means of the cylinder / plunger device 17, 18 in question (this is schematically shown with dashed and dotted lines in fig. 9 and designated 18), the respective guide arm 46 operates or controls the respective lifting arm 11-14 to raise or lower in such a way that the respective upper coupling members 47 on the respective lifting arm 11-14 move straight up and down in vertical direction. Hereby, a load carrier 5 engaged by the lifting arms 11-14 will be lifted or lowered linearly without at the same time being displaced further on or further backwards relative to the frame 3 nor tilted in relation thereto.

The coupling members 47 can be insertable from below into coupling members (not shown) therefor in the load carrier 5, such that said load carrier can not move relative to said coupling members in the longitudinal direction of the frame 3.

## Claims

1. Vehicle having a drive unit (1) and a U-shaped and rearwardly open frame (3) comprising a web member (8) which is fixedly connected with the driving unit (1), said vehicle being adapted to move backwards relative to a load carrier (5) until said load carrier is situated within the shanks (6, 7) of said U-shaped frame and adapted to lift said load carrier (5) from the ground (9) for transportation thereof after lifting and whereby the U-shaped frame (3) includes a lifting unit (10) having such vertically movable lifting arms (11-14) that said arms can
a) engage the load carrier (5) when it stands on the ground (9) within the shanks (6, 7) of the U-shaped frame (3);
b) lift said load carrier (5) from the ground (9) to a transport position (T), in which said load carrier is lockable relative to said U-shaped frame (3) and in which the vehicle can transport said load carrier; and
c) lift said load carrier (5) up above said transport position (T) to one or several positions (L), in which said load carrier is situated at a suitable height for loading and/or unloading;
**characterized in**
that two vertically movable lifting arms (11, 13) are provided on the inner side of one shank (6) of the U-shaped frame (3) and two other vertically movable lifting arms (12, 14) on the inner side of the other shank (7) of said U-shaped frame;
that a lower end of each lifting arm (11-14) is longitudinally displaceably mounted relative to the respective shank (6, 7);
that each lifting arm (11-14) is connected with respective shank (6, 7) through a guide arm (46) which is pivotally mounted on the lifting arm (11-14) and on the respective shank (6, 7); and
that the lower end of each lifting arm (11-14) is displaced relative to the shank (6, 7) by means of a cylinder/plunger device (17, 18),
whereby respective guide arm (46) controls the respective arm (11-14) to move the load carrier (5) in a vertical direction or a substantially vertical direction without substantial displacement thereof in longitudinal direction and/or without substantial tilting relative to the U-shaped frame (3).

2. Vehicle according to claim 1, **characterized in** that the lower end of each lifting arm (11-14) is provided with a pivot which engages a guide groove (44) in a guide rail (45) on the inside of a lower part of the respective shank (6, 7).

3. Vehicle according to claim 1 or 2**, characterized in** that the cylinder/plunger device (17, 18) is connected to the respective lifting arm (11-14) at a point above a connection between the lifting arm (11-14) and the guide arm (46).

4. Vehicle according to any preceding claim, **characterized in** that each lifting arm (11-14) through an upper coupling portion (47) is connectable with the load carrier (5) in such a way that said load carrier is not displaced in the longitudinal direction of the U-shaped frame (3) when said load carrier is lifted or lowered.

5. Vehicle according to any preceding claim, **characterized in** that the load carrier (5) is lockable relative to the U-shaped frame (3) in such a transport position (T) at which the bottom or lower side (32) of said load carrier is located in level with the bottom or lower side (33) of said U-shaped frame or at any level between the lower side (33) and top or upper side (34) of said U-shaped frame and that the load carrier (5) by means of the lifting arms (11-14) can be raised or lifted up to levels at which the lower side (32) of said load carrier is situated substantially above the upper side (34) of the U-shaped frame (3).

6. Vehicle according to any preceding claim, **characterized in** that the drive unit (1) of the vehicle includes a driving compartment, motor and front wheels 2 and that rear wheels (4) of the vehicle are provided at the rear of the shanks (6, 7) of the U-shaped frame (3).

## Patentansprüche

1. Fahrzeug mit einem Antrieb (1) und einem U-förmigen, hinten offenen Rahmen (3), der einen mit dem Antrieb (1) fest verbundenen Steg (8) aufweist, wobei das Fahrzeug vorgesehen ist, im Verhältnis zu einem Lastträger (5) rückwärts bewegt zu werden, bis sich der Lastträger innerhalb der Längsträger (6, 7) des U-förmigen Rahmens befindet, und weiterhin vorgesehen ist, den Lastträger (5) von dem Boden (9) hochzuheben zum Transport des Lastträgers nach dessen Hochheben, und wobei der U-förmige Rahmen (3) mit einer Hebevorrichtung (10) versehen ist, die solche senkrecht bewegliche Hebearme (11-14) besitzt, dass die genannten Arme
a) mit dem Lastträger (5) eingreifen können, wenn der Lastträger auf dem Boden (9) innerhalb der Längsträger (6, 7) des U-förmigen Rahmens (3) steht;
b) den Lastträger (5) von dem Boden (9) in eine Transportstellung (T) hochheben können, in welcher der Lastträger im Verhältnis zu dem U-förmigen Rahmen (3) verriegelbar ist und in welcher das Fahrzeug den Lastträger transportieren kann; und
c) den Lastträger (5) über die Transportstellung (T) hinauf in eine oder mehrere Stellungen (L) hochheben können, in denen sich der Lastträger in einer zweckmässigen Höhenlage zum Laden oder Entladen befindet;
dadurch **gekennzeichnet**, dass
zwei senkrecht bewegliche Hebearme (11, 13) an der Innenseite des einen Längsträgers (6) des U-förmigen Rahmens (3) und zwei andere senkrecht bewegliche Hebearme (12, 14) an der Innenseite des anderen Längsträgers (7) des U-förmigen Rahmens angeordnet sind;
dass ein unteres Ende jedes Hebearms (11-14) im Verhältnis zu dem bezüglichen Längsträger (6, 7) längsverschiebbar montiert ist;
dass jeder Hebearm (11, 14) mit dem bezüglichen Längsträger (6, 7) mittels eines Führungsarms (46) verbunden ist, welcher an dem Hebearm (11-14) und an dem bezüglichen Längsträger (6, 7) schwenkbar montiert ist; und
dass das untere Ende jedes Hebearms (11, 14) im Verhälnis zu dem Längsträger (6, 7) mittels einer Zylinder/Kolbenvorrichtung (17, 18) versetzbar ist,
wodurch der bezügliche Führungsarm (46) den bezüglichen Hebearm (11-14) steuert, um den Lastträger (5) in senkrechte oder hauptsächlich senkrechte Richtung zu bewegen, und zwar ohne wesentliche Versetzung desselben in der Längsrichtung und/oder ohne wesentliches Kippen desselben gegenüber dem U-förmigen Rahmen (3).

2. Fahrzeug nach Anspruch 1, dadurch **gekennzeichnet**, dass das untere Ende jedes Hebearms (11-14) mit einem Zapfen versehen ist, der in eine Führungsnut (44) einer Führungsschiene (45) an der Innenseite des unteren Teils des bezüglichen Längsträgers (6, 7) eingreift.

3. Fahrzeug nach Anspruch 1 oder 2, dadurch **gekennzeichnet**, dass die Zylinder/Kolbenvorrichtung (17, 18) mit dem bezüglichen Hebearm (11-14) in einem Punkt oberhalb einer Verbindung zwischen dem Hebearm (11-14) und dem Führungsarm (46) verbunden ist.

4. Fahrzeug nach irgendeinem der vorhergehenden Ansprüche, dadurch **gekennzeichnet**, dass jeder Hebearm (11-14) durch einen oberen Kupplungsteil (47) derart mit dem Lastträger (5) verbunden werden kann, dass der Lastträger bei dessen Hochheben oder Herabsenken nicht in der Längsrichtung des U-förmigen Rahmens (3) versetzt wird.

5. Fahrzeug nach irgendeinem der vorhergehenden Ansprüche, dadurch **gekennzeichnet**, dass der Lastträger (5) im Verhältnis zu dem U-förmigen Rahmen (3) in einer Transportstellung (T) verriegelbar ist, in welcher der Boden oder die Unterseite (32) des Lastträgers auf gleicher Höhe mit dem Boden oder der Unterseite (33) des U-förmigen Rahmens oder auf irgendwelcher Höhe zwischen der Unterseite (33) und der Oberseite (34) des U-förmigen Rahmens liegt und dass der Lastträger (5) mittels der Hebearme (11-14) in Höhenlagen hochgehoben werden kann, in denen die Unterseite (32) des Lastträgers im wesentlichen oberhalb der Oberseite (34) des U-förmigen Rahmens (3) liegt.

6. Fahrzeug nach irgendeinem der vorhergehenden Ansprüche, dadurch **gekennzeichnet**, dass der Antrieb (1) des Fahrzeugs ein Fahrerhaus sowie Motor und Vorderräder (2) umfasst und dass die Hinterräder (4) des Fahrzeugs hinten an den Längsträgern (6, 7) des U-förmigen Rahmens (3) angebracht sind.

## Revendications

1. Véhicule ayant une commande (1) et un cadre en forme de U et ouvert à l'arrière (3) comprenant une entretoise (8) qui est fixée à la commande (1), ledit véhicule pouvant être déplacé à l'arrière par rapport à un camion (5) jusq'à ce que le camion se trouve à l'intérieur des longerons (6, 7) du cadre en forme de U, le véhicule étant aussi susceptible de lever le camion (5) du fond (9) pour la transportation du camion après le soulèvement de celui-ci, et le cadre en forme de U (3) comportant un dispositif de levage (10) ayant des bras de levage (11-14) mobiles en sens vertical de sorte que lesdits bras
a) puissent être mis en prise avec le camion (5) lorsqu'il reste sur le fond (9) à l'intérieur des longerons (6, 7) du cadre en forme de U (3);
b) puissent lever le camion (5) du fond (9) à une position de transport (T), dans laquelle ledit camion peut être serré par rapport au cadre en forme de U (3) et dans laquelle le véhicule peut transporter ledit camion; et
c) puissent lever ledit camion (5) au-dessus de la position de transport (T) à une ou plusieurs positions (L), dans lesquelles ledit camion est situé à une hauteur convenable pour le chargement et/ou le déchargement de celui-ci;
**caractérisé** en ce que
deux bras de levage (11, 13) mobiles en sens vertical sont disposés à la face intérieure de l'un (6) des longerons (6, 7) du cadre en forme de U (3) et deux autres bras de levage (12, 14) mobiles en sens vertical sont disposés à la face intérieure de l'autre longeron (7) dudit cadre en forme de U;
qu'une extrémité inférieure de chaque bras de levage (11-14) est montée déplaçable en sens longitudinal par rapport au longeron respectif (6, 7);
que chaque bras de levage (11-14) est relié au longeron respectif (6, 7) par l'intérmédiaire d'un bras de guidage (46) monté pivotant sur le bras de levage (11-14) et sur le longeron respectif (6, 7); et
que l'extrémité inférieure de chaque bras de levage (11-14) est déplacée par rapport au longeron (6, 7) par l'intérmédiaire d'un dispositif à piston et cylindre (17, 18),
de sorte que le bras de guidage respectif (46) actionne le bras respectif (11-14) pour déplacer le camion (5) en sens vertical ou en sens essentiellement vertical sans aucun déplacement essentiel du camion en sens longitudinal et/ou sans aucun basculement essentiel par rapport au cadre en forme de U (3).

2. Véhicule selon la revendication 1, **caractérisé** en ce que l'extrémité inférieure de chaque bras de levage (11-14) est munie d'un pivot qui pénètre dans une rainure de guidage (44) prévue dans une glissière de guidage (45) arrangée à la face intérieure d'une partie inférieure du longeron respectif (6, 7).

3. Véhicule selon la revendication 1 ou 2, **caractérisé** en ce que le dispositif à piston et cylindre (17, 18) est relié au bras de levage respectif (11-14) à un point au-dessus d'un raccord entre le bras de levage (11-14) et le bras de guidage (46).

4. Véhicule selon l'une quelconque des revendications précédentes, **caractérisé** en ce que chaque bras de levage (11-14) peut être relié, par l'intermédiaire d'une partie d'accouplement supérieure (47), au camion (5) de sorte que ledit camion ne soit pas déplacé en sens longitudinal du cadre en forme de U (3), lorsque le camion est levé ou descendu.

5. Véhicule selon l'une quelconque des revendications précédentes, **caractérisé** en ce que le camion (5) peut être serré par rapport au cadre en forme de U (3) dans une position de transport (T), dans laquelle le fond ou la face inférieure (32) dudit camion est situé au niveau du fond ou de la face inférieure (33) du cadre en forme de U ou à n'importe quel niveau entre la face inférieure (33) et la face supérieure (34) dudit cadre en forme de U, et que le camion (5) peut être levé, au moyen des bras de levage (11-14), à des niveaux auxquels la face inférieure (32) dudit camion est située essentiellement au-dessus de la face supérieure (34) du cadre en forme de U (3).

6. Véhicule selon l'une quelconque des revendications précédentes, **caractérisé** en ce que la commande (1) du véhicule comprend une cabine de chauffeur, un moteur et des roues d'avant (2), et que les roues d'arrière (4) du véhicule sont montées à l'arrière des longerons (6, 7) du cadre en forme de U (3).
